# EUROPEAN PATENT APPLICATION

(11) **EP 1 908 885 A1**
(43) Date of publication of application: **09.04.2008**
(21) Application number: 06425656.3
(22) Date of filing: 26.09.2006
(51) Int. Cl.: E03C 1/04, E03C 1/042

(54) **Tap group**

(71) Applicant: CRS S.P.A., 28066 Galliate (IT)
(72) Inventor: Cristina, Alberto c/o CRS S.p.A., 28066 Galliate (Novara) (IT)
(74) Representative: Crippa, Paolo Ernesto

(57) **Abstract**

A tap group (4) comprising a built-in body (8) and a tap body (40) between which a connecting element (56) is arranged for correcting the orientation of the tap body (40) relative to the built-in body (8). The tap group allows an easy and accurate installation, ensuring the correct angular orientation of the tap body (40) relative to the housing wall (16).

## Description

The present invention relates to a tap group and in particular, to a built-in tap, suitable for being mounted, at least partly built-in, on a wall or a panel.

Built-in tap groups of the prior art comprise a water intake body built in the wall or panel the tap body leading into the dispensing outlet is associated to.

The installation of such known tap groups is very often complex and unsatisfactory, since the proper orientation of the tap group relative to an axis of rotation perpendicular to the wall or panel it is mounted on, as well as the perpendicularity itself of the tap body relative to such wall, are left to the fitter's skill.

In other words, the fitter must adapt the water intake body to the housing while ensuring the perpendicularity and the proper angular orientation thereof to an axis perpendicular to the panel so that the tap body is perfectly symmetric relative to a symmetry plane perpendicular to the wall or panel and for example to a standing surface for the user.

Such operation is very slow and often it does not ensure satisfactory aesthetic results.

In particular, an incorrect angular orientation relative to an axis perpendicular to the housing panel is unacceptable by a user and impairs the aesthetics of the tap group.

The problem of the present invention is to provide a tap group which should solve the disadvantages mentioned with reference to the prior art.

Such disadvantages are solved by a tap group in accordance with claim 1.

Other embodiments of the tap group according to the invention are described in the subsequent claims.

Further features and the advantages of the present invention will appear more clearly from the following description of preferred non-limiting embodiments thereof, wherein:

figure 1 shows a perspective view of a tap group according to an embodiment of the present invention, in a pre-assembled configuration;

figure 2 shows a perspective view of the tap group of figure 1, from a different angle;

figure 3 shows a front view of the tap group of figure 1, in an assembled configuration;

figure 4 shows a perspective view of the tap group of figure 1, in an assembled configuration;

figure 5 shows a perspective partial section view of the tap group of figure 1.

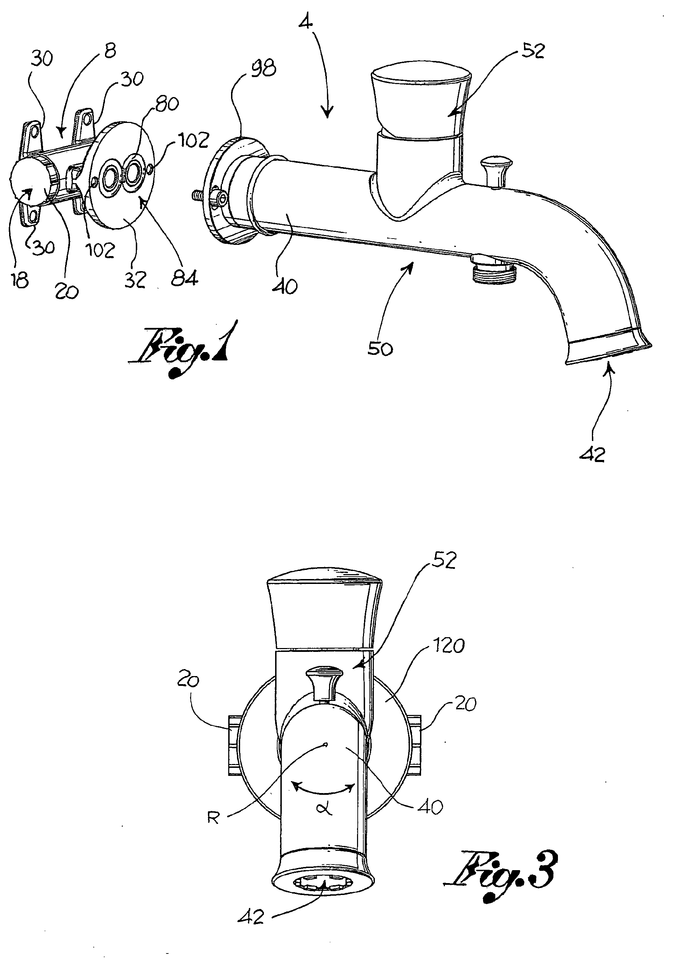

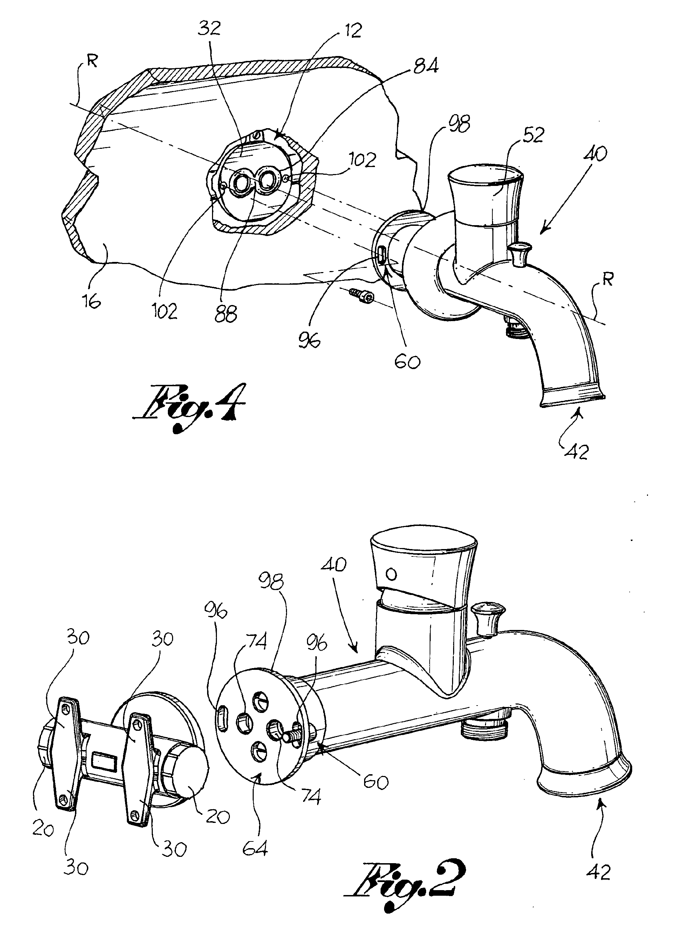

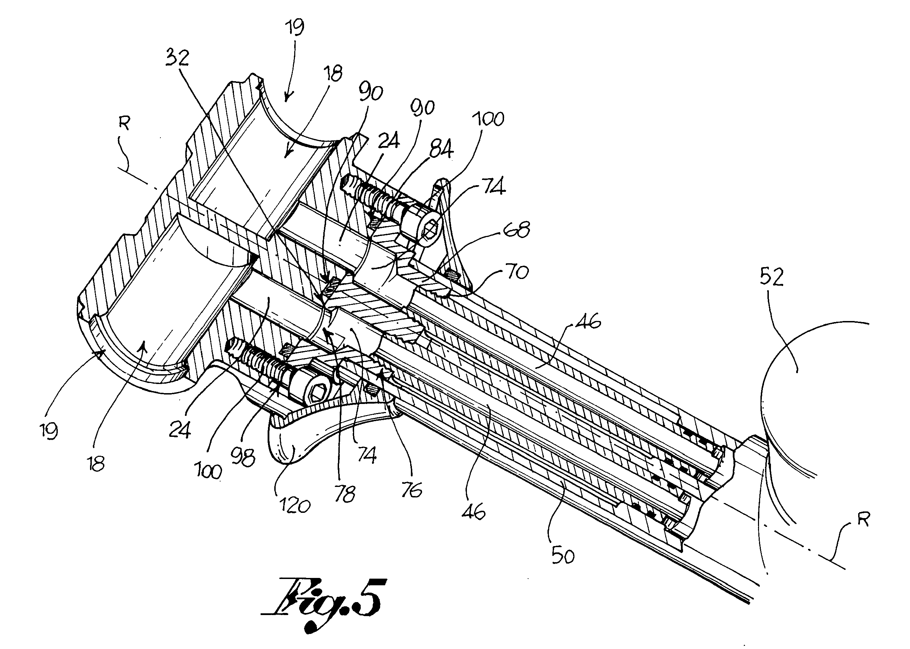

Elements or parts of elements in common between the embodiments described below are referred to with the same reference numerals.

With reference to the above figures, reference numeral 4 generically denotes a tap group comprising a built-in body 8, suitable for being at least partly seated in a housing 12, for example in a wall or on a panel 16.

According to an embodiment, the built-in body 8 is provided with at least one water intake 18 and preferably with two water intakes 18, one for feeding hot water and the other for feeding cold water. Said water intakes 18 can be connected in a known manner to the water system through openings 19 that can be closed by plugs 20 for preventing the entrance of dirt when the built-in body 8 is disconnected from the water system.

According to an embodiment, the built-in body 8 comprises at least one outlet 24, connected to the relevant water intake 18, for dispensing water to a tap component.

The built-in body 8 comprises fixing means to a housing, such as brackets 30 with holes for fixing through screws or bolts.

At a portion close to the housing wall 16 the built-in body 8 comprises an abutment plane 32, for example having circular shape, to which said outlets 24 lead.

Advantageously, the tap group 4 comprises a tap body 40, sealingly associable to said built-in body 8 and provided with a dispensing outlet 42 that receives the fluid for example from feeding ducts 46 that run inside a tap pipe 50.

Said feeding ducts 46 can be obtained integral into the pipe or through flexible pipes.

According to an embodiment, the tap body 40 comprises, upstream of the dispensing outlet 42, a mixing cartridge 52 that intercepts the water flows coming from the feeding ducts 46 and carries out the mixing between the same.

Advantageously, the tap group 4 comprises a connecting element 56, arranged between the tap body 40 and the built-in body 8, so as to obtain a water connection between the tap body 40 and the built-in body 8.

According to an embodiment, the connecting element 56 comprises adjusting means 60 for adjusting the relative position between the tap body 40 and the built-in body 8, suitable for changing the relative position between the tap body 40 and the built-in body 8, thus ensuring the fluid seal between said bodies for allowing water dispensing from outlet 42.

According to an embodiment, the connecting element 56 comprises a support plate 64 suitable for abutting against the abutment plane 32. The connecting element may be connected to the tap body 40 for example through direct sealed coupling of an internal collar 68 of the tap pipe 50. The coupling for example may be joint-wise, by gluing or screwing through a threaded portion 70.

The connecting element comprises at least one passage 74 suitable for obtaining the water connection between outlets 24 of the built-in body and feeding ducts 46.

In an assembled configuration, passages 74, at a first end 76 thereof facing the associable tap body 40, face the feeding ducts and at a second end 78 thereof, facing the associable built-in body 8 face outlets 24.

Preferably, moving the support plate 64 in contact against the abutment plane 32, ends 76 face the feeding ducts 46.

According to an embodiment, the tap group 4 comprises sealing means 80 arranged between the tap body 40 and the built-in body 8 for ensuring the fluid seal between the same.

Preferably, the sealing means 80 are arranged directly in contact between the abutment plane 32 and the support plate 64.

For example, the sealing means 80 comprise O-rings 84 arranged on the abutment plane of the built-in body 8 around outlets 24 and the feeding ducts 46.

According to an embodiment, the sealing means 80 comprise an O-ring 84 manufactured as a single part comprising two O-rings connected to each other by a partition 88.

According to an embodiment, seal 80, 84 is seated in a seat 90, counter-shaped relative to the seal. Seat 90 may be obtained either on the support plate 64 or on the abutment plane 32.

The adjustment means 60 for example comprise adjustment holes 96 arranged on a flange 98 of the connecting element 56. Advantageously, the adjustment holes 96 are slotted so as to allow a clearance between the holes themselves and threaded connecting means 100 for fixing the connecting element to the built-in body 8, through the introduction of the threaded connecting means 100 into fixing holes 62 of the built-in body 8. Such clearance allows a movement for adjusting the relative angular position between the tap body 40 and the built-in body 8 relative to an axis of rotation R perpendicular to said support plate 64 and to the abutment plane 32, as well as to the relative fixing panel 16.

Advantageously, the tap group 4 comprises two adjustment holes 96, arranged in diametrically opposite positions on collar 68, and suitable for allowing a movement of rotation between the tap body 40 and the built-in body 8, according to an angle of rotation α comprised between 0 and 15 degrees, and preferably between 0 and 6 degrees.

The relative rotation between the tap body 40 and the built-in body 8 takes place relative to an axis of rotation R substantially perpendicular to the support wall 16, so as to ensure the perpendicularity between the tap body and the support wall 16.

Seals 80, 84 have such extension as to surround outlets 24 and the ends of passages 74 of the connecting element 56 in all the relative positions these latter passages 74 take following the relative rotation of the tap body 40 relative to the built-in body 8.

According to an embodiment, the tap body 40 may be associated to a cover 120 arranged coaxially to the tap pipe so s to abut against the housing wall, for covering the adjustment means 60.

The assembly of a tap group according to the present invention will now be described.

The built-in body 8 is introduced in the relevant housing seat, for example in the wall or on a panel.

The built-in body 8 is positioned so as to substantially ensure the perpendicularity of the built-in body 8, and in particular of the abutment plane 32, to the housing wall 16.

The tap body 40 is rested on the built-in body 8, moving the support plate 64 in abutment against the abutment plane 32, and introducing the threaded connecting means in the respective adjustment 96 and fixing holes 102 and, after correctly orientating the tap body 40 relative to the axis of rotation R, the threaded connecting means 100 are tightened so as to firmly lock into position the tap body 40.

As can be appreciated from the description, the tap group of the present invention allows overcoming the disadvantages exhibited by the tap groups of the prior art.

In particular, the tap group according to the invention exhibits assembly easiness and inexpensiveness.

The system for adjusting the angular position between the tap body and the built-in body allows the fitter to correct any housing installation mistakes even after completing the housing operation itself.

The locking means are advantageously covered by the flange that can be easily removed for any further adjustments.

Thanks to the present invention it is possible to carry out the housing operation without requiring high assembly accuracy and thereby reducing the installation costs and times.

The counter-shaped seal relative to the edges of the outlet holes and to the inlets ensures the fluid seal over time.

A man skilled in the art may make several changes and adjustments to the tap groups described above in order to meet specific and incidental needs, all falling within the scope of protection defined in the following claims.

## Claims

1. Tap group (4) comprising
- a built-in body (8), suitable for being at least partly seated in a housing (12) of a panel (16), said built-in body (8) being in fluid connection with a water outlet for dispensing water through an outlet (24),
- a tap body (40), associable to said built-in body (8) for receiving the water and dispense it,
**characterised in that**
- the tap group (4) comprises a connecting element (56), arranged between the tap body (40) and the built-in body (8) and suitable for obtaining a water connection between the tap body (40) and the built-in body (8),
- said connecting element (56) comprising adjusting means (60) for adjusting the relative position between the tap body (40) and the built-in body (8), suitable for changing the relative position between the tap body (40) and the built-in body (8), relative to an axis of rotation (R) perpendicular to said panel (16), ensuring the water connection between said bodies (8, 40).

2. Tap group (4) according to claim 1, wherein the connecting element (56) comprises a support plate (64) suitable for abutting against an abutment plane (32) of the built-in body (8) for the water connection between said outlets (24) of the built-in body (8) and at least one passage (74) of said connecting element (56).

3. Tap group (4) according to claim 1 or 2, wherein the connecting element (56) is connected to the tap body (40) through the sealed coupling of a collar (68) inside a tap pipe (50) of the tap body (40).

4. Tap group (4) according to claim 3, wherein the connecting element (56) is connected to the tap body (40) by screwing a threaded portion (70) on said tap pipe (50).

5. Tap group (4) according to any one of the previous claims, wherein the connecting element comprises at least one passage (74) suitable for obtaining a water connection between outlets (24) of the built-in body (8) and feeding ducts (46) of the tap body (40).

6. Tap group (4) according to claim 5, wherein the passages (74), at a first end (76) of the connecting element (56) facing the associable tap body (40), face the feeding ducts (46) and at a second end (78) of the connecting element (56), facing the associable built-in body (8) face the outlets (24) .

7. Tap group (4) according to any one of the previous claims, comprising sealing means (80) arranged between the tap body (40) and the built-in body (8) for ensuring the fluid seal between the same.

8. Tap group (4) according to claim 7, wherein the sealing means (80) are placed directly in contact between an abutment plane (32) of the built-in body (8) and a support plate (64) of the tap body (40).

9. Tap group (4) according to claim 7 or 8, wherein the sealing means (80) comprise O-rings (84) arranged on the abutment plane of the built-in body (8) around the outlets (24) and the feeding ducts (46).

10. Tap group (4) according to claim 7, 8 or 9, wherein the sealing means (80) comprise an O-ring (84) manufactured as a single part comprising two O-rings (84) connected to each other by a partition (88).

11. Tap group (4) according to any one of claims 7 to 10, wherein the seal (80, 84) is seated in a seat (90), counter-shaped relative to the seal itself.

12. Tap group (4) according to claim 11, wherein said seat (90) is obtained on the support plate (64) or on the abutment plane (32).

13. Tap group (4) according to any one of the previous claims, wherein the adjustment means (60) comprise adjustment holes (96) arranged on a flange (98) of the connecting element (56).

14. Tap group according to claim 13, wherein the adjustment holes (96) are slotted so as to allow a clearance between the holes themselves and threaded connecting means (100) for fixing the connecting element (56) to the built-in body (8), said clearance allowing a movement of adjustment of the relative angular position between the tap body (40) and the built-in body (8) relative to the axis of rotation R, according to an angle of rotation (α).

15. Tap group according to claim 14, wherein said built-in element comprises fixing holes (102) suitable for allowing the lock of said threaded connecting means (100).

16. Tap group according to claim 14 or 15, wherein the tap group (4) comprises two adjustment holes (96), arranged in diametrically opposite positions on the collar (68), and suitable for allowing a movement of rotation between the tap body (40) and the built-in body (8), according to an angle of rotation (α).

17. Tap group according to any one of claims 14 to 16, wherein said clearance of the adjustment means (60) ensures an angle of rotation (α) comprised between 0 and 15 degrees.

18. Tap group according to claim 17, wherein said angle of rotation (α) is comprised between 0 and 6 degrees.

19. Tap group according to any one of the previous claims, wherein the sealing means (80) have such extension as to surround the outlets (24) and the ends of passages (74) of the connecting element (56) in all the relative positions these latter passages (74) take following the relative rotation of the tap body (40) relative to the built-in body (8).
